(19) Europäisches Patentamt / European Patent Office / Office européen des brevets

(11) **EP 3 814 724 B1**

(12) **EUROPÄISCHE PATENTSCHRIFT**

(45) Veröffentlichungstag und Bekanntmachung des Hinweises auf die Patenterteilung:
**02.11.2022   Patentblatt 2022/44**

(21) Anmeldenummer: **19726669.5**

(22) Anmeldetag: **23.05.2019**

(51) Internationale Patentklassifikation (IPC):
**G01F 1/58** *(2006.01)*        **G01F 1/60** *(2006.01)*

(52) Gemeinsame Patentklassifikation (CPC):
**G01F 1/58;** G01F 1/60

(86) Internationale Anmeldenummer:
**PCT/EP2019/063411**

(87) Internationale Veröffentlichungsnummer:
**WO 2020/001876 (02.01.2020 Gazette 2020/01)**

(54) **VERFAHREN ZUR INBETRIEBNAHME EINES MAGNETISCH-INDUKTIVEN DURCHFLUSSMESSGERÄTES UND EIN MAGNETISCH-INDUKTIVES DURCHFLUSSMESSGERÄT**

METHOD FOR COMMISSIONING A MAGNETIC INDUCTIVE FLOWMETER, AND A MAGNETIC INDUCTIVE FLOWMETER

PROCÉDÉ DE MISE EN SERVICE D'UN DÉBITMÈTRE INDUCTIF MAGNÉTIQUE ET DÉBITMÈTRE INDUCTIF MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2018   DE 102018115628**

(43) Veröffentlichungstag der Anmeldung:
**05.05.2021   Patentblatt 2021/18**

(73) Patentinhaber: **Endress + Hauser Flowtec AG**
**4153 Reinach (CH)**

(72) Erfinder:
• **TSCHAMBSER, Florent**
  **68220 Hesingue (FR)**
• **DREHER, Lars**
  **79282 Ballrechten Dottingen (DE)**

• **KAPPERTZ, Fred**
  **4146 Hochwald (CH)**

(74) Vertreter: **Penner, Paul**
**Endress + Hauser Group Services (Deutschland) AG+Co. KG**
**PatServe**
**Colmarer Straße 6**
**79576 Weil am Rhein (DE)**

(56) Entgegenhaltungen:
**EP-A2- 0 809 089        WO-A1-2007/033697**
**WO-A1-2015/176891    DE-A1- 10 312 058**
**JP-B2- 3 453 751        US-A- 4 117 721**
**US-A- 4 709 583**

**Beschreibung**

Magnetisch-induktive Durchflussmessgeräte werden zur Bestimmung der Durchflussgeschwindigkeit und des Volumendurchflusses eines Mediums in einem Messrohr eingesetzt. Ein magnetisch-induktives Durchflussmessgerät umfasst eine magnetfelderzeugende Vorrichtung, die ein Magnetfeld B senkrecht zur Messrohrachse erzeugt. Dafür werden üblicherweise einzelne oder mehrere Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Messrohrachse verlaufen. Ein an die Mantelfläche des Mess-rohres angebrachtes Messelektrodenpaar greift eine senkrecht zur Messrohrachse und zum Magnetfeld anliegende Potentialdifferenz ab, die entsteht, wenn ein leitfähiges Medium bei angelegtem Magnetfeld in Richtung der Messrohrachse fließt. Da die abgegriffene Potentialdifferenz laut Faraday'schem Induktionsgesetz von der Geschwindigkeit des fließenden Mediums abhängt, kann aus der Potentialdifferenz die Durchfluss-geschwindigkeit und, mit Hinzunahme eines bekannten Rohrquerschnitts, der Volumendurchfluss des Mediums ermittelt werden. Die an den Mess-elektroden anliegende Potentialdifferenz wird im Folgenden auch als Messspannung bezeichnet.

Um auftretende Störeffekte während einer Speisephase zu minimieren, wird üblicherweise eine Spannung mit wechselnder Polarität an die magnetfelderzeugende Vorrichtung bzw. an die Komponenten zur Erzeugung eines Magnetfeldes angelegt. Eine weitere Möglichkeit zur Minimierung von Stör-effekten ist beispielsweise in der Schrift DE 102016124976 A1 offenbart. Aus diesem Dokument geht ein magnetisch-induktives Durchflussmessgerät hervor, das eine Ruhephase zwischen den jeweiligen Polaritätswechseln aufweist, in der keine elektrische Spannung an die magnetfelderzeugende Vorrichtung angelegt wird. Die Charakteristik des in der Ruhephase auftretenden Störeffektes wird gemessen und zur Kompensation der nachfolgenden Störeffekte verwendet. Somit kann der jeweilige Magnetfeld-Endwert der Messphasen frühzeitig angepasst werden. Da der Magnetfeld-Endwert über mehrere Perioden variiert, muss diese Anpassung jedoch für jede Ruhephase und Speisephase neu durchgeführt werden.

EP 0969268 A1 offenbart ein Verfahren zum Regeln des in einer Spulen-anordnung fließenden Spulenstroms, so dass durch ein Anlegen eines Spannungs-Anfangswertes vor dem Spannungs-Endwert, wobei der Spannungs-Anfangswert größer ist als der Spannungs-Endwert, auftretende Wirbelströme kompensiert werden, die die Anstiegsflanke des Magnetfeldes gegenüber den Spulenstrom verzögern. Dadurch erreicht das Magnetfeld in jeder Halbperiode früher den Magnetfeld-Endwert.

Diesen Ausgestaltungen nachteilig ist aber, dass zwar in einer Halbperiode der Magnetfeld-Endwert bereits früher erreicht oder ermittelt wird, dieser sich aber weiterhin über mehrere Perioden ändern kann, bis er einen globalen eingeschwungenen Zustand erreicht. Dieses Verhalten kann insbesondere unmittelbar nach der Inbetriebnahme des Durchflussmessgerätes beobachtet werden. Um einen Messfehler von kleiner 0,2% zu erreichen, muss das magnetisch-induktive Durchflussmessgerät mehrere Tage in Betrieb sein. Dies ist insbesondere für magnetisch-induktive Durchflussmessgeräte problematisch, die direkt nach der Inbetriebnahme justiert werden, da der Messfehler dadurch mit in die Justierung eingeht. Eine mögliche Lösung zur dieses Problem ist in EP 0 809 089 A2 offenbart.

Der vorliegenden Erfindung liegt die Aufgabe zugrunde, ein Verfahren zur Inbetriebnahme eines magnetisch-induktiven Durchflussmessgerätes bereitzustellen, das die Einschwingzeit bis zum Erreichen des ein-geschwungenen Zustands reduziert, und ein magnetisch-induktives Durch-flussmessgerät, das dieses Verfahren ausführt.

Die Aufgabe wird erfindungsgemäß durch das Verfahren gemäß dem Anspruch 1 und durch das magnetisch-induktive Durchflussmessgerät gemäß dem Anspruch 13 gelöst.

Das erfindungsgemäße Verfahren zur Inbetriebnahme eines magnetisch-induktiven Durchflussmessgerätes weist Komponenten zur Erzeugung eines Magnetfeldes B auf, wobei an die Komponenten eine elektrische Spannung U zum Erzeugen des Magnetfeldes B angelegt wird, und mindestens ein Messelektrodenpaar zum Erfassen einer Potentialdifferenz in einem Medium, gekennzeichnet durch, ein Einschwingen der Komponenten während einer Einschwingzeit $t_a$ zur Stabilisierung des Magnetfeldes $B$ bis $\left|\frac{B_{ist}-B_{soll}}{B_{soll}}\right| < \Delta$ gilt, wobei $\Delta$ kleiner 0,25%, und insbesondere kleiner 0,2% und bevorzugt kleiner 0,05% ist, wobei $B_{ist}$ einem Magnetfeld-Endwert eines aktuellen Ist-Zustands des Magnetfeldes entspricht, wobei $B_{soll}$ dem Magnetfeld-Endwert eines eingeschwungenen Zustands des Magnetfeldes entspricht, in dem für ein beliebiges $B^*(t)$, $\left|\frac{B^*(t)-B^*(t+2k\cdot t_{m,j})}{B^*(t)}\right| < 1/1000$ gilt, wobei k eine natürliche Zahl größer/gleich 1000 ist, wobei während der Einschwingzeit $t_a$ ein erster Spannungsverlauf A an die Komponenten zur Erzeugung des Magnetfeldes angelegt wird, wobei nach der Einschwingzeit $t_a$ eine Messzeit $t_m$ beginnt, wobei während der Messzeit $t_m$ ein zweiter Spannungsverlauf M an die Komponenten zur Erzeugung des Magnetfeldes angelegt wird, wobei die Einschwingzeit $t_a$ in N erste Zeitintervalle eingeteilt ist, die jeweils eine erste Intervalldauer $t_{a,i}$ mit $i \in [1,2, ..., N]$ andauern, wobei die Messzeit $t_m$ in zweite Zeitintervalle eingeteilt ist, die jeweils eine zweite Intervalldauer $t_{m,j}$

mit $j \in \mathbb{N}$ andauern, wobei ein Mittelwert aller ersten Intervalldauern $\overline{t_{a,i}}$ immer kleiner als ein Mittelwert aller zweiten Intervalldauern $\overline{t_{m,j}}$ ist.

Der Verlauf des Magnetfeldes bzw. der an den Messelektroden anliegenden Messspannung während einer einzelnen Speisephase ist geprägt von einem Einschwingen in einen lokalen Endzustand zu Beginn der Speisephase und einem lokalen Endzustand, in dem der Verlauf im Wesentlichen konstant ist. Mit Erreichen des lokalen Endzustands beginnt die Messphase. Während der Messphase ermittelte Messwerte, werden als Endwerte bezeichnet. Zur Bestimmung der Durchflussgeschwindigkeit oder des Volumendurchflusses wird der Magnetfeld-Endwert und der Messspannung-Endwert der jeweiligen Messphase herangezogen. Mit dem Einschwingen der Komponenten zur Erzeugung eines Magnetfeldes in einen eingeschwungenen Zustand konvergiert der lokale Endzustand gegen einen globalen Endzustand.

Nach der Inbetriebnahme eines magnetisch-induktiven Durchflussmess-gerätes ändert sich der Magnetfeld-Endwert $B_{ist}$ über mehrere Messzyklen, bis er endlich, zumeist nach Tagen, gegen einen Magnetfeld-Endwert $B_{soll}$ eines eingeschwungenen Zustands des Magnetfeldes konvergiert. Dieses Verhalten ist bei batterie- und akkubetriebenen magnetisch-induktiven Durchflussmessgeräten besonders ausgeprägt. Daher werden magnetisch-induktive Durchflussmessgeräte typischerweise 30 Minuten vor der Kalibrierung eingeschaltet, wodurch ein Einschwingen der magnetfeld-erzeugenden Komponenten gewährleistet und die Abweichung des Magnetfeld-Endwertes $B_{ist}$ vom eingeschwungenen Magnetfeld-Endwert $B_{soll}$ reduziert wird. Das erfindungsgemäße Verfahren bewirkt eine Reduktion der Wartezeit bis zum Erreichen des eingeschwungenen Magnetfeldes $B_{soll}$ durch eine zusätzliche Einschwingzeit $t_a$, mit einem charakteristischen Spannungsverlauf A. Die angelegte elektrische Spannung $U$ wechselt nach jeder ersten Intervalldauer $t^{a,i}$ und nach jeder zweiten Intervalldauer $t_{m,j}$ das Vorzeichen.

Für die Erzeugung der Spannungsverläufe A und/oder M werden vorzugsweise elektronische Bauteile verwendet, die in der Schrift EP 0969268 A1 offenbart sind.

Vorteilhafte Ausgestaltungen der Erfindung sind Gegenstand der Unter-ansprüche.

Es hat sich als vorteilhaft herausgestellt, die erste Intervalldauer $t_{a,i}$ kleiner zu wählen als die zweite Intervalldauer $t_{m,j}$. Dadurch wechselt das Magnetfeld die Polung während der Einschwingzeit $t_a$ schneller, so dass in kurzer Zeit mehr Energie in die Komponenten zur Erzeugung des Magnetfeldes induziert wird. Dadurch schwingen sich die Komponenten schneller ein und der Magnetfeld-Endwert $B_{ist}$ erreicht früher den eingeschwungenen Magnetfeld-Endwert $B_{soll}$.

Gemäß einer weiteren Ausgestaltung weist der zweite Spannungsverlauf M eine dritte Spannung $U_{m,shot,i}$ und/oder eine vierte Spannung $U_{m,hold,i}$ auf.

Gemäß einer weiteren Ausgestaltung weist der erste Spannungsverlauf A eine erste Spannung $U_{a,shot,i}$ und/oder eine zweite Spannung $U_{a,hold,i}$ auf.

Gemäß einer weiteren Ausgestaltung ist die erste Intervalldauer $t_{a,i}$ durch mindestens eine erste Zeit $t_{a,shot,i}$, in der die erste Spannung $U_{a,shot,i}$ angelegt wird, und/oder mindestens eine zweite Zeit $t_{a,hold,i}$, in der die zweite Spannung $U_{a,hold}$ angelegt wird, gekennzeichnet.

Es hat sich als vorteilhaft herausgestellt einen aus der EP 0969268 A1 bekannten Spannungsverlauf mit einer $U_{shot}$ und einer $U_{hold}$ auch vor der Messzeit $t_m$, jedoch mit kürzeren ersten Intervalldauern $t_{a,i}$, anzulegen. Gemäß dieser Ausgestaltung kann der eingeschwungene Zustand bereits früher erreicht werden, wobei die Anpassung der Schaltung nur insoweit erforderlich ist, dass die Länge der Intervalldauern neu festzulegen ist.

Gemäß einer weiteren Ausgestaltung gilt $U_{a,shot,i} \geq U_{a,hold,i}$ und

$$t_{a,shot,i} \leq t_{a,hold,i}.$$

Gemäß einer weiteren Ausgestaltung gilt $U_{a,shot,i} \geq U_{a,shot,i+2}$, insbesondere $U_{a,shot,i} > U_{a,shot,i+2}$, wobei $t_{a,shot,i} \leq t_{a,shot,i+2}$ gilt.

Gemäß einer weiteren Ausgestaltung besteht das i-te erste Zeitintervall $t_{a,i}$ der Einschwingzeit $t_a$ aus folgenden Merkmalen:

a. Anlegen der ersten Spannung $U_{a,shot,i}$ für die erste Zeit $t_{a,shot,i}$,
b. Anlegen der zweiten Spannung $U_{a,hold,i}$ für die zweite Zeit $t_{a,hold,i}$,
c. Wechseln des Vorzeichens der Spannung.

In einer abgewandelten Form der oben genannten Ausgestaltung wird auf das Anlegen der zweiten Spannung $U_{a,hold,i}$ für die zweite Zeit $t_{a,hold,i}$ verzichtet.

Gemäß einer weiteren Ausgestaltung ist die Einschwingzeit $t_a$ kleiner gleich 2h, und insbesondere kleiner gleich 30min und bevorzugt kleiner gleich 5min.

Gemäß einer weiteren Ausgestaltung wird eine Durchflussgeschwindigkeit und/oder ein Volumendurchfluss des Mediums anhand der während der Messzeit $t_m$, insbesondere während der vierten Zeit $t_{m,hold,j}$ und bevorzugt während einer Messphase, in welcher Messphase das Magnetfeld B im Wesentlichen konstant ist, an den Messelektroden anliegenden Potential-differenz ermittelt.

Beim Polaritätswechsel der angelegten Spannung an die Komponenten zur Erzeugung des Magnetfeldes treten Störeffekte auf, die bewirken, dass nach jedem Polaritätswechsel eine gewisse Zeit abgewartet werden muss, bis das Magnetfeld seinen lokalen Endzustand erreicht. Der Zeitraum, in dem das Magnetfeld eingeschwungen und im Wesentlichen konstant ist, wird als Messphase bezeichnet. Sie ist Teil einer Speisephase, in der eine Spannung an die magnetfelderzeugenden Komponenten angelegt wird. Das resultierende Magnetfeld der Messphase wird als Magnetfeld-Endwert bezeichnet und dient zur Bestimmung des Volumendurchflusses des Mediums. Die an den Messelektroden während der Messphase anliegende Potentialdifferenz bzw. Messspannung wird als Messspannungs-Endwert bezeichnet.

Gemäß einer weiteren Ausgestaltung ist die zweite Intervalldauer $t_{m,j}$ durch mindestens eine dritte Zeit $t_{m,shot,j}$, in der die dritte Spannung $U_{m,shot,j}$ angelegt wird, und/oder mindestens eine vierte Zeit $t_{m,hold,j}$, in der die vierte Spannung $U_{m,hold,j}$ angelegt wird, gekennzeichnet, wobei das $j$-te zweite Zeitintervall der Messzeit $t_m$ aus folgenden Merkmalen besteht:

a. Anlegen der dritten Spannung $U_{m,shot,j}$ für die dritte Zeit $t_{m,shot,j}$,
b. Anlegen der vierten Spannung $U_{m,hold,j}$ für die vierte Zeit $t_{m,hold,j}$,
c. Wechseln des Vorzeichens der Spannung.

Gemäß einer weiteren Ausgestaltung gilt $U_{a,shot,i} \geq U_{m,shot,j} \geq U_{m,hold,j}$, insbesondere

$$U_{m,shot,j} > U_{m,hold,j}.$$

Gemäß einer weiteren Ausgestaltung nimmt die erste Spannung $U_{a,shot}$ und die dritte Spannung $U_{m,shot,j}$ einen Wert größer gleich 2V, und insbesondere größer gleich 12V und bevorzugt größer gleich 60V an, wobei die zweite Spannung $U_{a,hold,i}$ und die vierte Spannung $U_{m,hold,j}$ einen Wert größer gleich 0,4V annimmt.

Gemäß einer weiteren Ausgestaltung ist ein Verhältnis $t_{m,j}/t_{a,i}$ größer 2, insbesondere größer 4 und bevorzugt größer 8.

Ein erfindungsgemäßes magnetisch-induktives Durchflussmessgerät umfasst eine Betriebseinheit, die dadurch gekennzeichnet ist, dass sie das erfindungsgemäße Verfahren zur Inbetriebnahme eines magnetisch-induktiven Durch-flussmessgerätes ausführt.

Die Erfindung wird anhand der nachfolgenden Figuren näher erläutert. Es zeigt:

Fig. 1: eine schematische Darstellung eines magnetisch-induktiven Durchflussmessgerätes nach dem Stand der Technik;

Fig. 2: einen Verlauf des Magnetfeld-Endwertes $B_{ist}$ über einen Zeitraum von fünf Stunden für ein herkömmlich in Betrieb genommenes (gepunktete Verlauf) und ein mit dem erfindungsgemäßen Verfahren in Betrieb genommenes (durchgehende Verlauf) magnetisch-induktives Durchfluss-messgerät;

Fig. 3: beispielhafte Spannungsverläufe A und M, für die gelten, dass

$$U_{m,hold,j} = U_{a,hold,i};$$

Fig. 4: beispielhafter Spannungsverlauf A, umfassend eine erste Spannung $U_{a,shot,i}$, und Spannungsverlauf M, umfassend eine dritte Spannung $U_{m,shot,j}$ und eine vierte Spannung $U_{m,hold,j}$, wobei $U_{m,shot,j} = U_{a,shot,i}$ gilt;

Fig. 5: beispielhafte Spannungsverläufe A und M, wobei Spannungsverlauf A die erste Spannung $U_{a,shot,i}$ und die zweite Spannung $U_{a,hold,i}$ umfasst, und Spannungsverlauf M die dritte Spannung $U_{m,shot,j}$ und die vierte Spannung $U_{m,hold,j}$ umfasst, mit $U_{a,shot,i} = U_{m,shot,j}$, $U_{a,hold,i} = U_{m,hold,j}$ und

$$t_{a,shot,i} = t_{m,shot,j};$$

Fig. 6: beispielhafte Spannungsverläufe A und M, wobei Spannungsverlauf A die erste Spannung $U_{a,shot,i}$ und die zweite Spannung $U_{a,hold,i}$ umfasst, und Spannungsverlauf M die dritte Spannung $U_{m,shot,j}$ und die vierte Spannung $U_{m,hold,j}$ umfasst, mit variablen $U_{a,shot,i}$, $t_{a,shot,i}$ und $t_{a,hold,i}$, und mit festem $U_{m,shot,j}$. Für diesen beispielhaften Spannungsverlauf gilt fernerhin

$$U_{a,hold,i} = U_{m,hold,j};$$

und

Fig. 7: beispielhafte Spannungsverläufe A und M, umfassend ein variables $U_{a,shot,i}$, $t_{a,shot,i}$, $t_{a,hold,i}$ $U_{m,shot,j}$ und $t_{m,shot,j}$ über den Verlauf von mehrere erste Zeitintervalle, wobei $U_{a,hold,i} = U_{m,hold,j}$ gilt.

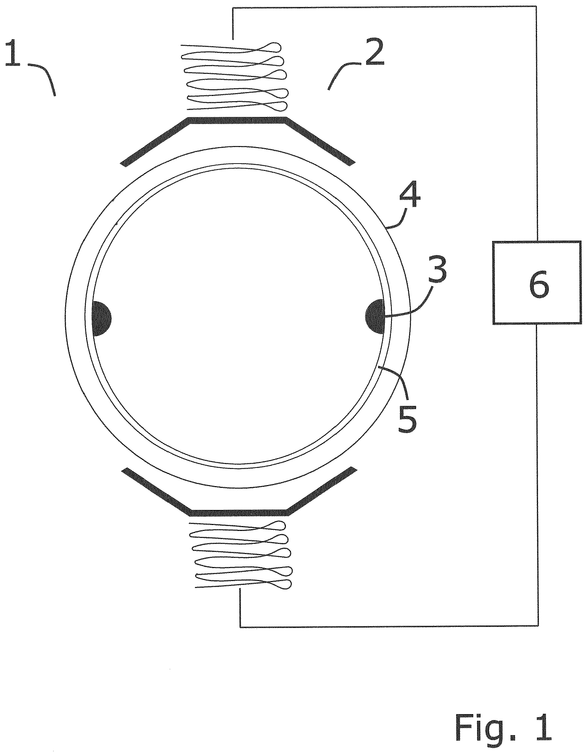

Der Aufbau und das Messprinzip eines magnetisch-induktiven Durchfluss-messgerätes ist grundsätzlich bekannt (siehe Fig. 1). Durch ein Messrohr (1) wird ein Medium geleitet, das eine elektrische Leitfähigkeit aufweist. Eine magnetfelderzeugende Vorrichtung ist bzw. Komponenten zur Erzeugung eines Magnetfeldes (2) sind so angebracht, dass sich die Magnetfeldlinien senkrecht zu einer durch die Messrohrachse definierten Längsrichtung orientieren. Als magnetfelderzeugende Vorrichtung (2) eignet sich vorzugsweise eine Sattelspule oder ein Polschuh mit aufgesetzter Spule. Bei angelegtem Magnetfeld entsteht im Messrohr (1) eine Potentialverteilung, die mit zwei an der Innenwand des Messrohres angebrachten Messelektroden (3) abgegriffen werden kann. In der Regel sind diese diametral angeordnet und bilden eine Elektrodenachse, die senkrecht zu den Magnetfeldlinien und der Längsrichtung verläuft.

Anhand der an den Messelektroden anliegenden Messspannung kann, unter Berücksichtigung der magnetischen Flussdichte, die Durchflussgeschwindigkeit und, unter Berücksichtigung der Rohr-querschnittsfläche, der Volumendurchfluss des Mediums bestimmt werden. Dafür wird die ermittelte Messspannung mittels einer Auswerteeinheit ausgewertet. Um das Ableiten der an den Messelektroden anliegenden Messspannung über das Rohr (4) zu verhindern, wird die Innenwand mit einem isolierenden Material, beispielsweise einem Liner (5), verkleidet. Das durch die magnetfelderzeugende Vorrichtung (2) aufgebaute Magnetfeld wird durch einen getakteten Gleichstrom wechselnder Polarität erzeugt. Dies gewährleistet einen stabilen Nullpunkt und macht die Messung im Wesentlichen unempfindlich gegenüber Einflüssen durch Mehrphasenstoffe, Inhomogenitäten in der Flüssigkeit oder geringer Leitfähigkeit. Die an der magnetfelderzeugenden Vorrichtung anliegende Spannung wird über eine Betriebseinheit (6) kontrolliert und angepasst.

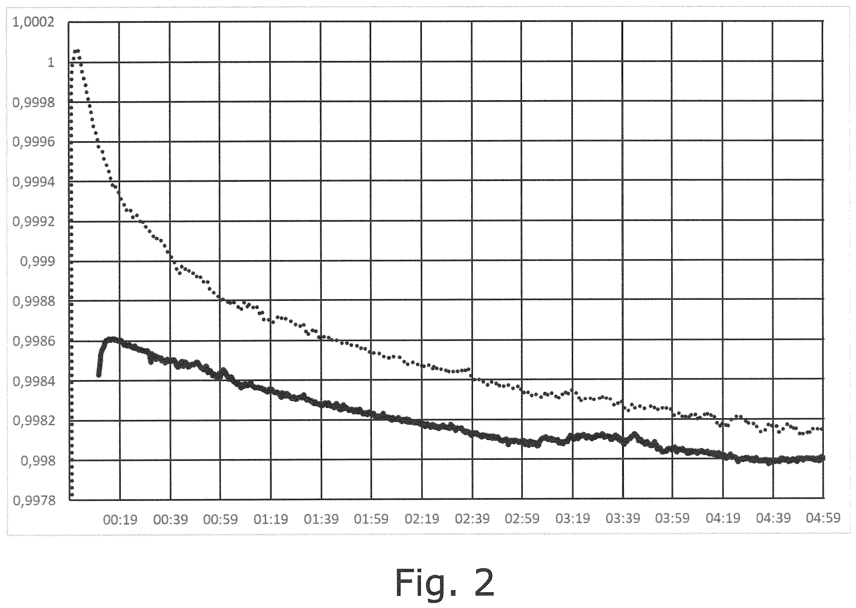

Nach der Inbetriebnahme eines magnetisch-induktiven Durchflussmess-gerätes kann der Magnetfeld-Endwert $B_{ist}$ der unterschiedlichen Phasen über mehrere Stunden bzw. mehrere Tage schwanken. Fig. 2 zeigt den relativen Magnetfeld-Endwert $B_{ist}$ (Y-Achse) über den Verlauf von 5 Stunden (X-Achse). Die gestrichelten Daten sind direkt nach Inbetriebnahme des magnetisch-induktiven Durchflussmessgerätes und ohne Einschwingphase aufgenommen. Nach dem Einschalten der magnetfelderzeugenden Vorrichtung weicht der zu Beginn gemessene Magnetfeld-Endwert bis zu 0,2% von dem nach 5 Stunden ermittelten Magnetfeld-Endwert ab. Dabei ist der globale Endzustand des Magnetfeldes selbst nach 5 Stunden noch nicht erreicht. Die durchgezogene Linie spiegelt die ermittelten Daten eines mit einer zehnminütigen Einschwingphase in Betrieb genommenen magnetisch-induktiven Durchflussmessgerätes wieder. Bereits zu Beginn der Messzeit weicht der resultierende Magnetfeld-Endwert $B_{ist}$ nur noch 0,06% von Magnetfeld-Endwert $B_{soll}$ des eingeschwungenen Zustands des Magnetfeldes ab.

Für die Ermittlung des Magnetfeld-Endwertes in Fig. 2 wurde ein Magnetfeld-sensor, in diesem Fall eine temperaturunabhängige Pickup-Sonde, in das Magnetfeldzentrum des magnetisch-induktiven Durchflussmessgerätes positioniert und das resultierende Magnetfeld in Abhängigkeit der Zeit gemessen. Die Messungen wurden bei Raumtemperatur und im Leerzustand des Messrohres durchgeführt.

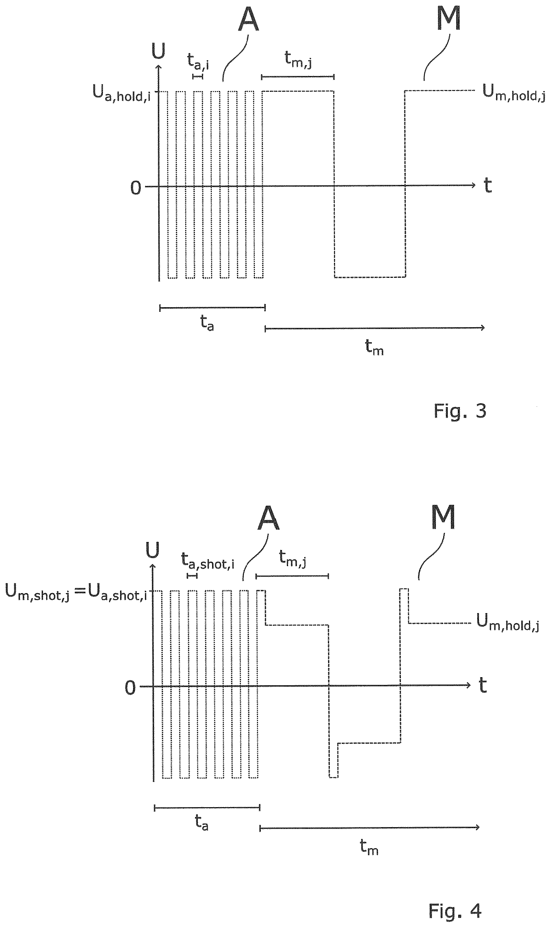

Fig. 3 stellt beispielhaft die Spannungsverläufe A und M dar, die eine Einschwingzeit $t_a$ und eine Messzeit $t_m$ andauern. In diesem Fall ist die Einschwingzeit $t_a$ in 12 erste Intervalle mit einer jeweiligen Intervalldauer $t_{a,i}$ eingeteilt. Sie kann aber auch mehr bzw. weniger als 12 erste Zeitintervalle umfassen. Während des ersten Zeitintervalls wird eine Spannung $U$, in diesem Fall eine zweite Spannung $U_{a,hold,i}$, an die magnetfelderzeugende Vorrichtung angelegt, deren Vorzeichen sich zu Beginn jedes neuen ersten Zeitintervalls ändert (siehe gepunkteter Verlauf). Die Dauer jedes ersten Zeitintervals beträgt $t_{a,i}$ und ist in dieser Ausgestaltung für die gesamte Einschwingzeit $t_a$ konstant. Nach der Einschwingzeit $t_a$ beginnt die Messzeit $t_m$ (siehe gestrichelter Verlauf), die wiederum in einzelne zweite Zeitintervalle mit einer zweiten Intervalldauer $t_{m,j}$ eingeteilt ist. Während jedes zweiten Zeitintervalls wird eine Spannung $U$, in diesem Fall die vierte Spannung $U_{m,hold,j}$, mit wechselndem Vorzeichen angelegt. In Fig. 3 ist die Dauer jedes zweiten Zeitintervalls $t_{m,j}$ über die gesamte Messzeit $t_m$ konstant. Dabei gilt erfindungsgemäß, dass die erste Zeitintervalldauer $t_{a,i}$ kleiner als die zweite Zeitintervalldauer $t_{m,j}$ ist. Für beide Spannungsverläufe A und M gelten

$$U_{a,hold,i} = U_{m,hold,j}.$$

Ein Vorteil dieser ersten Ausgestaltung besteht darin, dass der einge-schwungene Zustand der magnetfelderzeugenden Komponenten, durch das Verkürzen der Intervalldauer während der Einschwingzeit $t_a$, schneller erreicht wird. Außerdem kann für die Erstellung der Spannungsverläufe A und M auf eine herkömmliche elektronische Beschaltung zurückgegriffen werden.

Fig. 4 stellt beispielhaft die Spannungsverläufe A und M dar, die eine Einschwingzeit $t_a$ und eine Messzeit $t_m$ andauern. In diesem Fall ist die Einschwingzeit $t_a$ in 12 erste Zeitintervalle eingeteilt. Sie kann aber auch mehr bzw. weniger erste Zeitintervalle umfassen. Während jedes ersten Zeit-intervals wird eine erste Spannung $U_{a,shot,i}$ angelegt (gepunkteter Verlauf). Nach der Einschwingzeit $t_a$ beginnt die Messzeit $t_m$, die wiederum in einzelne zweite Zeitintervalle mit einer zweiten Intervalldauer $t_{m,j}$ eingeteilt ist. Diese wiederum teilen sich jeweils in eine dritte Zeit $t_{m,shot,j}$, in der eine dritte Spannung $U_{m,shot,j}$ angelegt wird, und in eine vierte Zeit $t_{m,hold,j}$, in der eine vierte Spannung $U_{m,hold,j}$ angelegt wird, auf (siehe gestrichelter Verlauf). Dabei ist in dieser Ausgestaltung die dritte Zeit $t_{m,shot,j}$ kleiner als die vierte Zeit $t_{m,hold,j}$ und gleich der ersten Zeit $t_{a,shot,i}$.

In dieser zweiten Ausgestaltung wird auf das Anlegen der zweiten Spannung $U_{a,hold,i}$, während der Einschwingzeit $t_a$, verzichtet.

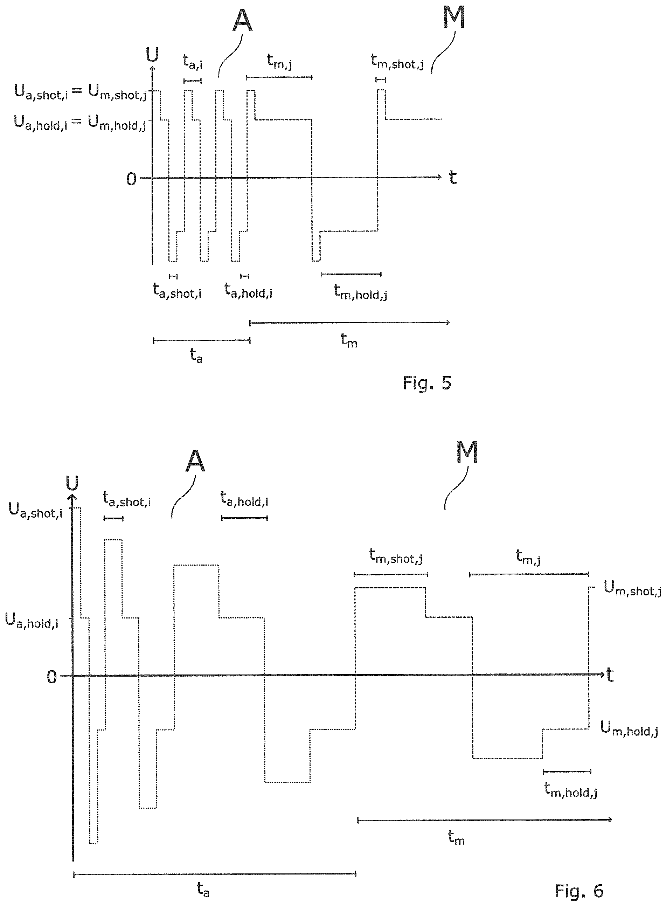

Fig. 5 stellt beispielhaft weitere Spannungsverläufe A und M dar, die eine Einschwingzeit $t_a$ und eine Messzeit $t_m$ andauern. In diesem Fall ist die Einschwingzeit $t_a$ in 6 erste Zeitintervalle eingeteilt. Sie kann aber auch mehr bzw. weniger erste Zeitintervalle umfassen. Während jedes ersten Zeitintervals wird eine erste Spannung $U_{a,shot,i}$ für eine erste Zeit $t_{a,shot,i}$ und eine zweite Spannung $U_{a,hold,i}$ für eine zweite Zeit $t_{a,hold,i}$ angelegt (siehe gepunkteter Verlauf). Diese Folge alterniert während der gesamten Einschwingzeit $t_a$. Dabei gilt, dass die erste Spannung $U_{a,shot,i}$ immer größer ist, als die zweite Spannung $U_{a,hold,i}$. In diesem Beispiel ist die erste Zeit $t_{a,shot,i}$ gleich der zweiten Zeit $t_{a,hold,i}$. Das Vorzeichen ändert sich zu Beginn jedes neuen ersten Zeitintervals. Die erste Intervalldauer $t_{a,i}$ ist für die gesamten Einschwingzeit $t_a$ konstant. Nach der Einschwingzeit $t_a$ beginnt die Messzeit $t_m$, die wiederum in einzelne zweite Zeitintervalle mit einer zweiten Intervalldauer $t_{m,j}$ eingeteilt ist. Diese wiederum teilen sich jeweils in eine dritte Zeit $t_{m,shot,j}$, in der eine dritte Spannung $U_{m,shot,j}$ angelegt wird, und in eine vierte Zeit $t_{m,hold,j}$, in der eine vierte Spannung $U_{m,hold,j}$ angelegt wird, auf (siehe gestrichelter Verlauf). Diese Folge alterniert während der gesamten Messzeit $t_m$. Dabei ist in dieser Ausgestaltung die dritte Zeit $t_{m,shot,j}$ kleiner als die vierte Zeit $t_{m,hold,j}$ und gleich der ersten Zeit $t_{a,shot,i}$. In Fig. 5 ist die Dauer jedes zweiten Zeitintervalls $t_{m,j}$ über die gesamte Messzeit $t_m$ gleich. Dabei gilt erfindungsgemäß, dass die erste Intervalldauer $t_{a,i}$ kleiner ist, als die zweite Intervalldauer $t_{m,j}$. In dieser Ausgestaltung entspricht die erste Spannung $U_{a,shot,i}$ der dritten Spannung $U_{m,shot,j}$ und die zweite Spannung $U_{a,hold,i}$ der vierten Spannung $U_{m,hold,j}$.

Der Vorteil dieser dritten Ausgestaltung ist, dass der Magnetfeld-Endwert $B_{ist}$ den eingeschwungenen Magnetfeld-Endwert $B_{soll}$ bereits früher erreicht, als in der ersten Ausgestaltung. Aus EP 0969268 A1 ist ein ähnlicher Spannungs-verlauf bereits bekannt. Dieser wird dort während der Messzeit $t_m$ angelegt, daher kann für die dritte Ausgestaltung auf eine gleichartige bzw. auf die gleiche elektronische Beschaltung zurückgegriffen werden.

Fig. 6 stellt gemäß einer Ausgestaltung weitere Spannungsverläufe A und M dar, die eine Einschwingzeit $t_a$ und eine Messzeit $t_m$ andauern. In diesem Fall ist die Einschwingzeit $t_a$ in 6 erste Zeitintervalle eingeteilt. Sie kann aber auch mehr bzw. weniger erste Zeitintervalle umfassen. Während jedes ersten Zeitintervals wird eine Spannung $U_{a,shot,i}$ und eine zweite Spannung $U_{a,hold,i}$ angelegt. Die erste Spannung $U_{a,shot,i}$ ist größer als die zweite Spannung $U_{a,hold,i}$ und variert über die gesamte Einschwingzeit $t_a$. Die erste Spannung $U_{a,shot,i}$ wird für eine erste Zeit $t_{a,shot,i}$ angelegt, die zweite Spannung $U_{a,hold,i}$ direkt nach der ersten Spannung für eine zweite Zeitdauer $t_{a,hold,i}$ (siehe gepunkteter Verlauf). Beide Zeitdauern $t_{a,shot,i}$ und $t_{a,hold,i}$ variieren über die gesamte Einschwingzeit $t_a$. Das Vorzeichen der angelegten Spannung U ändert sich zu Beginn jedes neuen ersten Zeitintervals. Diese Folge alterniert während der gesamten Einschwingzeit $t_a$. Nach der Einschwingzeit $t_a$ beginnt die Messzeit $t_m$, die wiederum in einzelne zweite Zeitintervalle $t_{m,j}$ eingeteilt ist. Diese wiederum teilen sich jeweils in eine dritte Zeit $t_{m,shot,j}$, in der eine dritte Spannung $U_{m,shot,j}$ angelegt wird, und in eine vierte Zeit $t_{m,hold,j}$, in der eine vierte Spannung $U_{m,hold,j}$ angelegt wird, auf (siehe gestrichelter Verlauf). Diese Folge alterniert während der gesamten Einschwingzeit $t_m$. Dabei ist die dritte Zeit $t_{m,shot,j}$ immer kleiner als oder gleich die vierte Zeit $t_{m,hold,j}$. In dieser Ausgestaltung ist die zweite Spannung $U_{a,hold,i}$ gleich der vierten Spannung $U_{m,hold,j}$ und die erste Spannung $U_{a,shot,i}$ größer gleich der dritten Spannung $U_{m,shot,j}$. In Fig. 6 ist die Intervalldauer $t_{m,j}$ über die gesamten Messzeit $t_m$ konstant. Dabei gilt erfindungsgemäß, dass die erste Intervall-dauer $t_{a,i}$ kleiner ist als die zweite Intervalldauer $t_{m,j}$.

In einer weiteren Form der vierten Ausgestaltung nimmt die erste Spannung $U_{a,shot,i}$ mit steigender Periodenzahl ab, bis sie den Wert der dritten Spannung $U_{m,shot,j}$ annimmt. Die erste Zeitdauer $t_{a,shot,i}$ hängt von der ersten Spannung $U_{a,shot,i}$ ab. Die erste Zeitdauer $t_{a,shot,i}$ nimmt mit zunehmender ersten Spannung $U_{a,shot,i}$ ab.

Durch $U_{a,shot,i} > U_{m,shot,j}$ wird während der Einschwingzeit mehr Energie pro Zeiteinheit in die magnetfelderzeugenden Komponenten eingespeisst, als während der Messzeit. Dadurch wird der eingeschwungene Zustand früher erreicht.

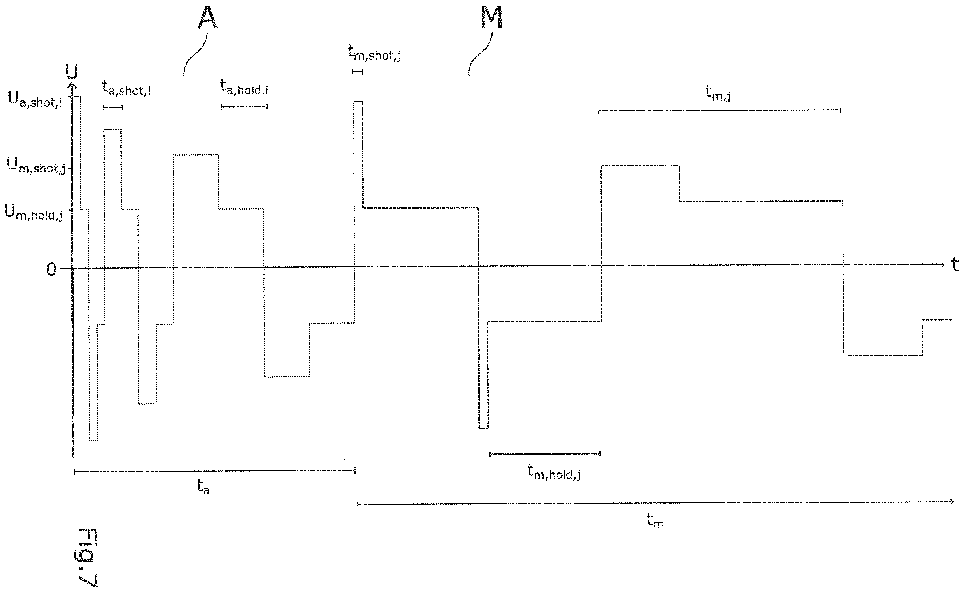

Fig. 7 stellt gemäß einer Ausgestaltung weitere Spannungsverläufe A und M dar, die eine Einschwingzeit $t_a$ und eine Messzeit $t_m$ andauern. In diesem Fall ist die Einschwingzeit $t_a$ in 6 erste Zeitintervalle eingeteilt mit einer jeweiligen Intervalldauer $t_{a,i}$. Sie kann aber auch mehr bzw. weniger erste Zeitintervalle umfassen. Während jedes ersten Zeitintervals wird eine Spannung $U_{a,shot,i}$ und eine zweite Spannung $U_{m,hold,j}$ angelegt. Die erste Spannung $U_{m,shot,j}$ ist größer als die zweite Spannung $U_{m,hold,j}$. Die erste Spannung $U_{a,shot,i}$ wird für eine erste Zeit $t_{a,shot,i}$ angelegt, die zweite Spannung $U_{a,hold,i}$ direkt nach der ersten Spannung $U_{a,shot,i}$ für eine zweite Zeit $t_{a,hold,i}$ (siehe gepunkteter Verlauf). Beide Zeitdauern $t_{a,shot,i}$ und $t_{a,hold,i}$ variieren über die gesamte Einschwingzeit $t_a$. Das Vorzeichen ändert sich zu Beginn jedes neuen ersten Zeitintervals. Diese Folge alterniert während der gesamten Einschwingzeit $t_a$. Nach der Einschwingzeit $t_a$ beginnt die Messzeit $t_m$, die wiederum in einzelne zweite Zeitintervalle eingeteilt ist. Diese wiederum teilen sich jeweils in eine dritte Zeit $t_{m,shot,j}$, in der eine dritte Spannung $U_{m,shot,j}$ angelegt wird, und in eine vierte Zeit $t_{m,hold,j}$, in der eine vierte Spannung $U_{m,hold,j}$ angelegt wird, auf (siehe gestrichelter Verlauf). Das Vorzeichen ändert sich zu Beginn jedes neuen zweiten Zeitintervals. Diese Folge alterniert während der gesamten Einschwingzeit $t_m$. Dabei ist die dritte Zeit $t_{m,shot,j}$ kleiner als die vierte Zeitintervall $t_{m,hold,j}$. In Fig. 7 variert die zweite Intervalldauer $t_{m,j}$, insbesondere die dritte Zeit $t_{m,shot,j}$ und die vierte Zeit $t_{m,hold,j}$, über die Messzeit $t_m$. Dabei gilt erfindungsgemäß, dass die erste Intervalldauer $t_{a,i}$ kleiner ist als die zweite Intervalldauer $t_{m,j}$.

In den obigen Ausgestaltungen sind die zweite Spannung $U_{a,hold,i}$ und vierte Spannung $U_{m,hold,j}$ konstant gewählt. Die Erfindung ist allerdings nicht auf eine konstante zweite Spannung $U_{a,hold,i}$ und eine konstante vierte Spannung $U_{m,hold,j}$ beschränkt. Weiterhin muss die erste, zweite, dritte oder vierte Zeit nicht über die gesamte Messzeit bzw. Einschwingzeit variieren. Beispielsweise kann die Einschwingzeit $t_a$ Folgen von Zeitintervallen umfassen, in denen die erste Spannung $U_{a,shot,i}$ mit steigendem Zeitintervall zunimmt oder abnimmt, und Zeitintervalle, in denen die erste Spannung $U_{a,shot,i}$ konstant ist.

In den Ausgestaltungen, insbesondere in den Spannungsverläufen A und M in Fig. 3 bis 7, wird von einer Spannung ausgegangen, die über einen gewissen Zeitraum konstant ist. Alle Spannungsverläufe stellen Idealfälle dar, die nur dann gelten, wenn der elektrische Widerstand der Spulen unveränderlich ist, insbesondere temperaturunabhängig. Es ist bekannt, dass sich die Spulen im Betrieb erwärmen, dadurch ändert sich auch der elektrische Widerstand der Spulen. Um ein konstantes Magnetfeld zu realisieren, muss ein konstanter Spulenstrom gewährleistet werden. Dies wird durch Anpassung der anliegenden Spulenspannung bei Widerstandsänderung umgesetzt. Es ist beispielsweise bekannt, dass nach Erwärmen der Spulen auf ~90°C eine Anpassung der angelegten Spulenspannung um bis zu 30% vom Anfangswert erforderlich sein kann.

**Bezugszeichenliste**

1   Messrohr
2   magnetfelderzeugende Vorrichtung
3   Messelektrode
4   Rohr
5   Liner
6   Betriebseinheit
A   erster Spannungsverlauf
M   zweiter Spannungsverlauf

**Patentansprüche**

1.  Verfahren zur Inbetriebnahme eines magnetisch-induktiven Durchflussmessgerätes, welches Komponenten (2) zur Erzeugung eines Magnetfeldes $B$ aufweist

    wobei an die Komponenten eine elektrische Spannung $U$ zum Erzeugen des Magnetfeldes $B$ angelegt wird, und mindestens ein Messelektrodenpaar (3) zum
    Erfassen einer Potentialdifferenz in einem Medium,
    wobei ein Einschwingen der Komponenten während einer Einschwingzeit $t_a$ zur Stabilisierung des Magnetfeldes $B$ erfolgt, bis gilt:

    $$\left| \frac{B_{ist} - B_{soll}}{B_{soll}} \right| < \Delta,$$

    wobei $\Delta$ kleiner 0,25% ist,
    wobei $B_{ist}$ einem Magnetfeld-Endwert eines aktuellen Ist-Zustands des Magnetfeldes entspricht,
    wobei $B_{soll}$ dem Magnetfeld-Endwert eines eingeschwungenen Zustands des Magnetfeldes entspricht, in dem für ein beliebiges Magnetfeld

$B^*(t)$ gilt:

$$\left| \frac{B^*(t) - B^*(t + 2k \cdot t_{m,j})}{B^*(t)} \right| < 1/1000,$$

wobei k eine natürliche Zahl größer/gleich 1000 ist,
wobei während der Einschwingzeit $t_a$ ein erster Spannungsverlauf A an die Komponenten zur Erzeugung des Magnetfeldes angelegt wird,
wobei nach der Einschwingzeit $t_a$ eine Messzeit $t_m$ beginnt,
wobei während der Messzeit $t_m$ ein zweiter Spannungsverlauf M an die Komponenten zur Erzeugung des Magnetfeldes angelegt wird,
wobei die Einschwingzeit $t_a$ in $N$ erste Zeitintervalle eingeteilt ist, die jeweils eine erste Intervalldauer $t_{a,i}$ mit $i \in [1,2,...,N]$ andauern,
wobei die Messzeit $t_m$ in zweite Zeitintervalle eingeteilt ist, die jeweils eine zweite Intervalldauer $t_{m,j}$ mit $j \in \mathbb{N}$ andauern,
wobei ein Mittelwert aller ersten Intervalldauern $\overline{t_{a,i}}$ immer kleiner als ein Mittelwert aller zweiten Intervalldauern $\overline{t_{m,j}}$ ist,
wobei die angelegte elektrische Spannung $U$ nach jeder ersten Intervalldauer $t_{a,i}$ und nach jeder zweiten Intervalldauer $t_{m,j}$ das Vorzeichen wechselt.

2.  Verfahren nach dem vorherigen Anspruch, wobei der zweite Spannungsverlauf M eine dritte Spannung $U_{m,shot,j}$ und/oder eine vierte Spannung $U_{m,hold,j}$ aufweist.

3.  Verfahren nach einem der vorherigen Ansprüche,

    wobei der erste Spannungsverlauf A eine erste Spannung $U_{a,shot,i}$ und/oder eine zweite Spannung $U_{a,hold,i}$ aufweist,
    wobei $U_{a,shot,i} \geq U_{a,hold,i}$.

4.  Verfahren nach einem der vorherigen Ansprüche,

    wobei die erste Intervalldauer $t_{a,i}$ durch mindestens eine erste Zeit $t_{a,shot,i}$, in der die erste Spannung $U_{a,shot,i}$ angelegt wird, und/oder mindestens eine zweite Zeit $t_{a,hold,i}$, in der die zweite Spannung $U_{a,hold,i}$ angelegt wird, gekennzeichnet ist,
    wobei $t_{a,shot,i} \leq t_{a,hold,i}$.

5.  Verfahren nach dem vorherigen Anspruch,

    wobei $U_{a,shot,i} \geq U_{a,shot,i+2}$, insbesondere $U_{a,shot,i} > U_{a,shot,i+2}$,

wobei $t_{a,shot,i} \leq t_{a,shot,i+2}$.

6. Verfahren nach einem der vorherigen Ansprüche, wobei das i-te erste Zeitintervall $t_{a,i}$ der Einschwingzeit $t_a$ aus folgenden Merkmalen besteht:

     a. Anlegen der ersten Spannung $U_{a,shot,i}$ für die erste Zeit $t_{a,shot,i}$,
     b. Anlegen der zweiten Spannung $U_{a,hold,i}$ für die zweite Zeit $t_{a,hold,i}$,
     c. Wechseln des Vorzeichens der Spannung.

7. Verfahren nach einem der vorherigen Ansprüche, wobei die Einschwingzeit $t_a$ kleiner gleich 2h, und insbesondere kleiner gleich 30min und bevorzugt kleiner gleich 5min ist.

8. Verfahren nach einem der vorherigen Ansprüche, wobei eine Durchflussgeschwindigkeit und/oder ein Volumendurchfluss des Mediums anhand der während der Messzeit $t_m$, insbesondere während der vierten Zeit $t_{m,hold,j}$ und bevorzugt während einer Messphase, in welcher Messphase das Magnetfeld B im Wesentlichen konstant ist, an den Messelektroden anliegenden Potentialdifferenz ermittelt wird.

9. Verfahren nach einem der vorherigen Ansprüche,

     wobei die zweite Intervalldauer $t_{m,j}$ durch mindestens eine dritte Zeit $t_{m,shot,j}$, in der die dritte Spannung $U_{m,shot,j}$ angelegt wird, und/oder mindestens eine vierte Zeit $t_{m,hold,j}$, in der die vierte Spannung $U_{m,hold,j}$ angelegt wird, gekennzeichnet ist,
     wobei das j-te zweite Zeitintervall der Messzeit $t_m$ aus folgenden Merkmalen besteht:

         d. Anlegen der dritten Spannung $U_{m,shot,j}$ für die dritte Zeit $t_{m,shot,j}$,
         e. Anlegen der vierten Spannung $U_{m,hold,j}$ für die vierte Zeit $t_{m,hold,j}$,
         f. Wechseln des Vorzeichens der Spannung.

10. Verfahren nach einem der vorherigen Ansprüche, wobei $U_{a,shot,i} \geq U_{m,shot,j} \geq U_{m,hold,j}$, insbesondere $U_{m,shot,j} > U_{m,hold,j}$.

11. Verfahren nach einem der vorherigen Ansprüche,

     wobei die erste Spannung $U_{a,shot,i}$ und die dritte Spannung $U_{m,shot,j}$ einen Wert größer gleich 2V, und insbesondere größer gleich 12V und bevorzugt größer gleich 60V annimmt,
     wobei die zweite Spannung $U_{a,hold,i}$ und die vierte Spannung $U_{m,hold,j}$ einen Wert größer gleich 0,4V annimmt.

12. Verfahren nach einem der vorherigen Ansprüche, wobei ein Verhältnis $t_{m,j}/t_{a,i}$ größer 2, insbesondere größer 4 und bevorzugt größer 8 ist.

13. Magnetisch-induktives Durchflussmessgerät, umfassend eine Betriebseinheit (6), **dadurch gekennzeichnet,** **dass** die Betriebseinheit ein Verfahren nach einem der vorherigen Ansprüche ausführt.

## Claims

1. Procedure to commission an electromagnetic flowmeter,

     wherein said flowmeter comprises components (2) designed to generate a magnetic field B
     wherein an electrical voltage U is applied to the components to generate the magnetic field B, and at least one pair of measuring electrodes (3) designed to detect a potential difference in a medium,
     wherein a settling of components takes place during a settling time $t_a$ for the purpose of stabilizing the magnetic field B, until the following applies:

$$\left| \frac{B_{ist} - B_{soll}}{B_{soll}} \right| < \Delta,$$

     wherein $\Delta$ is less than 0.25 %,
     wherein $B_{ist}$ corresponds to a magnetic field end value of a current actual state of the magnetic field,
     wherein $B_{soll}$ corresponds to the magnetic field end value of a stabilized state of the magnetic field in which the following applies for any magnetic field $B^*(t)$:

$$\left| \frac{B^*(t) - B^*(t + 2k \cdot t_{m,j})}{B^*(t)} \right| < 1/1000 ,$$

     wherein k is a natural number greater than or equal to 1000,
     wherein a first voltage curve A is applied to the components for the generation of the magnetic field during the settling time $t_a$,
     wherein a measuring time $t_m$ commences after the settling time $t_a$,
     wherein a second voltage curve M is applied to the components for the generation of the magnetic field during the measuring time $t_m$,
     wherein the settling time $t_a$ is divided into N first time intervals which each last a first interval duration $t_{a,i}$ with $i \in [1, 2, ..., N]$,
wherein the measuring time $t_m$ is divided into second time intervals which each last a second interval duration $t_{m,j}$ with $j \in N$,
wherein an average of all the first interval durations $\overline{t_{a,I}}$ is always less than an average of all the second interval durations $\overline{t_{m,J}}$,
wherein the applied electrical voltage $U$ changes sign after every first interval duration $t_{a,i}$ and after every second interval duration $t_{m,j}$.

2. Procedure as claimed in the previous claim,
wherein the second voltage curve M comprises a third voltage $U_{m,shot,j}$ and/or a fourth voltage $U_{m,hold,j}$.

3. Procedure as claimed in one of the previous claims,
wherein the first voltage curve A comprises a first voltage $U_{a,shot,i}$ and/or a second voltage $U_{a,hold,i}$,
wherein $U_{a,shot,i} \geq U_{a,hold,i}$.

4. Procedure as claimed in one of the previous claims,

wherein the first interval duration $t_{a,i}$ is **characterized by** at least a first time $t_{a,shot,i}$, in which the first voltage $U_{a,shot,i}$ is applied and/or at least a second time $t_{a,hold,i}$, in which the second voltage $U_{a,hold,i}$ is applied,
wherein $t_{a,shot,i} \leq t_{a,hold,i}$.

5. Procedure as claimed in the previous claim,

wherein $U_{a,shot,i} \geq U_{a,shot,i+2}$, particularly $U_{a,shot,i} > U_{a,shot,i+2}$,
wherein $t_{a,shot,i} \leq t_{a,shot,i+2}$.

6. Procedure as claimed in one of the previous claims,
wherein the $i$-th first time interval $t_{a,i}$ of the settling time $t_a$ comprises the following characteristics:

a. Application of the first voltage $U_{a,shot,i}$ for the first time $t_{a,shot,i}$,
b. Application of the second voltage $U_{a,hold,i}$ for the second time $t_{a,hold,i}$,
c. Change of sign of the voltage.

7. Procedure as claimed in one of the previous claims,
wherein the settling time $t_a$ is less than or equal to 2 h, and particularly less than or equal to 30 min, and preferably less than or equal to 5 min.

8. Procedure as claimed in one of the previous claims,
wherein a flow velocity and/or a volume flow of the medium is/are determined using the potential difference applied to the measuring electrodes during the measuring time $t_m$, particularly during the fourth time $t_{m,hold,j}$ and preferably during a measuring phase, wherein the magnetic field B is essentially constant during said measuring phase.

9. Procedure as claimed in one of the previous claims,

wherein the second interval duration $t_{m,j}$ is **characterized by** at least a third time $t_{m,shot,j}$ in which the third voltage $U_{m,shot,j}$ is applied and/or at least a fourth time $t_{m,hold,j}$, in which the fourth voltage $U_{m,hold,j}$ is applied,
wherein the $j$-th second interval of the measuring time $t_m$ consists of the following characteristics:

d. Application of the third voltage $U_{m,shot,j}$ for the third time $t_{m,shot,j}$,
e. Application of the fourth voltage $U_{m,hold,j}$ for the fourth time $t_{m,hold,j}$,
f. Change of the sign of the voltage.

10. Procedure as claimed in one of the previous claims,
wherein $U_{a,shot,i} \geq U_{m,shot,j} \geq U_{m,hold,j}$, particularly $U_{m,shot,j} > U_{m,hold,j}$.

11. Procedure as claimed in one of the previous claims,

wherein the first voltage $U_{a,shot,i}$ and the third voltage $U_{m,shot,j}$ adopt a value greater than or equal to 2 V, and particularly greater than or equal to 12 V and preferably greater than or equal to 60 V,
wherein the second voltage $U_{a,hold,i}$ and the fourth voltage $U_{m,hold,j}$ adopt a value greater than or equal to 0.4 V.

12. Procedure as claimed in one of the previous claims,
wherein a relationship $t_{m,j}/t_{a,i}$ is greater than 2, particularly greater than 4 and preferably greater than 8.

13. Electromagnetic flowmeter comprising an operating unit (6),
**characterized in that**
the operating unit executes a procedure according to one of the previous claims.

**Revendications**

1. Procédé destiné à la mise en service d'un débitmètre électromagnétique,

lequel débitmètre comprend des composants (2) destinés à générer un champ magnétique $B$ une tension électrique $U$ étant appliquée aux composants pour générer le champ magnétique $B$, et au moins une paire d'électrodes de mesure (3) étant destinées à détecter une différence de potentiel dans un produit,
un amortissement des composants ayant lieu pendant un temps d'établissement $t_a$ pour sta-

biliser le champ magnétique B, jusqu'à obtenir la relation suivante :

$$\left| \frac{B_{ist} - B_{soll}}{B_{soll}} \right| < \Delta,$$

$\Delta$ étant inférieur à 0,25 %,
$B_{ist}$ correspondant à une valeur finale de champ magnétique d'un état réel actuel du champ magnétique,
$B_{soll}$ correspondant à la valeur finale de champ magnétique d'un état stabilisé du champ magnétique, dans lequel on a, pour un champ magnétique $B^*(t)$ quelconque, la relation suivante :

$$\left| \frac{B^*(t) - B^*(t + 2k \cdot t_{m,j})}{B^*(t)} \right| < 1/1000,$$

k étant un nombre naturel égal ou supérieur à 1 000,
une première courbe de tension A étant appliquée aux composants de génération du champ magnétique pendant le temps d'établissement $t_a$,
un temps de mesure $t_m$ commençant après le temps d'établissement $t_a$,
une deuxième courbe de tension M étant appliquée aux composants de génération du champ magnétique pendant le temps de mesure $t_m$,
le temps d'établissement $t_a$ étant divisé en N premiers intervalles de temps qui présentent chacun une première durée d'intervalle $t_{a,i}$ avec i $\in$ [1, 2, ..., N],
le temps de mesure $t_m$ étant divisé en deuxièmes intervalles de temps qui durent chacun une deuxième durée d'intervalle $t_{m,j}$ avec j $\in$ N,
une valeur moyenne de toutes les premières durées d'intervalle $\overline{t_{a,I}}$ étant toujours inférieure à une valeur moyenne de toutes les deuxièmes durées d'intervalle $\overline{t_{m,J}}$,
la tension électrique appliquée U changeant de signe après chaque première durée d'intervalle $ta,i$ et après chaque deuxième durée d'intervalle $t_{m,j}$.

2. Procédé selon la revendication précédente,
pour lequel la deuxième courbe de tension M comprend une troisième tension $U_{m,shot,j}$ et/ou une quatrième tension $U_{m,hold,j}$.

3. Procédé selon l'une des revendications précédentes,

pour lequel la première courbe de tension A comprend une première tension $U_{a,shot,i}$ et/ou une deuxième tension $U_{a,hold,i}$,
avec la relation $U_{a,shot,i} \geq U_{a,hold,i}$.

4. Procédé selon l'une des revendications précédentes,

pour lequel la première durée d'intervalle $t_{a,i}$ est **caractérisée par** au moins un premier temps $t_{a,shot,i}$ dans lequel la première tension $U_{a,shot,i}$ est appliquée et/ou au moins un deuxième temps $t_{a,hold,i}$ dans lequel la deuxième tension $U_{a,hold,i}$ est appliquée,
avec la relation $t_{a,shot,i} \leq t_{a,hold,i}$.

5. Procédé selon la revendication précédente,

pour lequel $U_{a,shot,i} \geq U_{a,shot,i+2}$, notamment $U_{a,shot,i} > U_{a,shot,i+2}$,
pour lequel $ta,shot,i \leq t_{a,shot,i+2}$.

6. Procédé selon l'une des revendications précédentes,
pour lequel le i-ième premier intervalle de temps $t_{a,i}$ du temps d'établissement $t_a$ est constitué des caractéristiques suivantes :

a. Application de la première tension $U_{a,shot,i}$ pendant le premier temps $t_{a,shot,i}$,
b. Application de la deuxième tension $U_{a,hold,i}$ pendant le deuxième temps $t_{a,hold,i}$,
c. Changement du signe de la tension.

7. Procédé selon l'une des revendications précédentes,
pour lequel le temps de stabilisation $t_a$ est inférieur ou égal à 2 h, et notamment inférieur ou égal à 30 min, et de préférence inférieur ou égal à 5 min.

8. Procédé selon l'une des revendications précédentes,
pour lequel une vitesse d'écoulement et/ou un débit volumique du produit sont déterminés à l'aide de la différence de potentiel appliquée aux électrodes de mesure pendant le temps de mesure $t_m$, notamment pendant le quatrième temps $t_{m,hold,j}$ et de préférence pendant une phase de mesure, phase de mesure pendant laquelle le champ magnétique B est sensiblement constant.

9. Procédé selon l'une des revendications précédentes,

pour lequel la deuxième durée d'intervalle $t_{m,j}$ est **caractérisée par** au moins un troisième temps $t_{m,shot,j}$ dans lequel la troisième tension $U_{m,shot,j}$ est appliquée et/ou au moins un quatrième temps $t_{m,hold,j}$ dans lequel la quatrième tension $U_{m,hold,j}$ est appliquée,
le j-ième deuxième intervalle du temps de mesure $t_m$ étant constitué des caractéristiques suivantes :

    d. Application de la troisième tension $U_{m,shot,j}$ pendant le troisième temps $t_{m,shot,j}$,
    e. Application de la quatrième tension $U_{m,hold,j}$ pendant le quatrième temps $t_{m,hold,j}$,
    f. Changement du signe de la tension.

10. Procédé selon l'une des revendications précédentes,
pour lequel $U_{a,shot,i} \geq U_{m,shot,j} \geq U_{m,hold,j}$, notamment $U_{m,shot,j} > U_{m,hold,j}$.

11. Procédé selon l'une des revendications précédentes,

    pour lequel la première tension $U_{a,shot,i}$ et la troisième tension $U_{m,shot,j}$ prennent une valeur supérieure ou égale à 2 V, et notamment supérieure ou égale à 12 V et de préférence supérieure ou égale à 60 V,
    la deuxième tension $U_{a,hold,i}$ et la quatrième tension $U_{m,hold,j}$ prenant une valeur supérieure ou égale à 0,4 V.

12. Procédé selon l'une des revendications précédentes,
pour lequel un rapport $t_{m,j}/t_{a,i}$ est supérieur à 2, notamment supérieur à 4 et de préférence supérieur à 8.

13. Débitmètre électromagnétique comprenant une unité d'exploitation (6),
**caractérisé en ce que**
l'unité d'exploitation exécute un procédé selon l'une des revendications précédentes.

Fig. 1

Fig. 2

Fig. 3

Fig. 4

Fig. 5

Fig. 6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016124976 A1
- EP 0969268 A1
- EP 0809089 A2